# EUROPEAN PATENT APPLICATION

(11) **EP 2 565 411 A1**
(43) Date of publication of application: **06.03.2013**
(21) Application number: 10850632.0
(22) Date of filing: 26.04.2010
(51) Int. Cl.: F01N 3/20, F01N 3/02

(54) **INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: UNO, Koki, Toyota-shi, Aichi 471-8571 (JP); HASHIMOTO, Eiji, Toyota-shi, Aichi 471-8571 (JP); MORI, Taiichi, Toyota-shi, Aichi 471-8571 (JP); FUJIWARA, Masahiro, Toyota-shi, Aichi 471-8571 (JP); HANADA, Shunichi, Toyota-shi, Aichi 471-8571 (JP); KANBA, Chika, Toyota-shi, Aichi 471-8571 (JP)
(74) Representative: Intès, Didier Gérard André
(86) International application number: PCT/JP2010/002985
(87) International publication number: WO 2011/135608

(57) **Abstract**

Internal combustion engine according to the invention comprises an exhaust treatment apparatus provided in an exhaust passage, a burner apparatus provided upstream of the exhaust treatment apparatus for increasing exhaust temperature, and a variable mechanism for varying valve timing of an exhaust valve. The variable mechanism is controlled in such a manner that, when a flow amount of exhaust gas passing through the burner apparatus is equal to or more than a predetermined value, the exhaust valve opens in the middle of piston descending during an expansion stroke. When the exhaust valve is opened at this timing, high-temperature exhaust or combustion gas existing in combustion chamber at this time is sent to the burner apparatus, making it possible to increase atmosphere gas temperature of the burner apparatus. Therefore, even when flow amount of exhaust gas is increased to the predetermined value or more, sufficient ignition performance can be ensured.

## Description

### Technical Field

The present invention relates to an internal combustion engine, and particularly, to an internal combustion engine provided with a burner apparatus upstream of an exhaust treatment apparatus in an exhaust passage for increasing an exhaust temperature.

### Background Art

There are some cases where in an exhaust passage in an internal combustion engine, a burner apparatus is provided upstream of an exhaust treatment apparatus (catalyst or the like), wherein a heated gas generated in the burner apparatus is used to increase an exhaust temperature for heating the exhaust treatment apparatus, thus promoting warming-up of the exhaust treatment apparatus.

PTL 1 discloses a catalyst-temperature increasing apparatus equipped with an addition valve for injecting fuel and ignition means having a heat generation portion for igniting the injected fuel. The addition valve and the ignition means located in a position where the fuel injected by the addition valve makes direct contact with the heat generation portion. In this manner, the burner apparatus typically ignites the fuel injected into an exhaust passage by the appropriate ignition means for combustion.

Incidentally an ignition performance of the burner apparatus has a tendency of being deteriorated when a flow amount of an exhaust gas passing through the burner apparatus is increased to a predetermined value or more. The reason for it is that, when the flow amount of the exhaust gas is large, an atmosphere gas temperature of the ignition means is lowered, and a gas flow speed is fast, therefore putting out the fire even if the fuel is ignited.

Therefore, an object of the present invention is to provide an internal combustion engine which can ensure sufficient ignition performance even when a flow amount of an exhaust gas passing through a burner apparatus is increased.

### Citation List

### Patent Literature

PTL 1: Japanese Patent Laid-Open No. 2006-112401

### summary of Invention

According to one aspect of the present invention, there is provided an internal combustion engine comprising:
an exhaust treatment apparatus provided in an exhaust passage;
a burner apparatus provided upstream of the exhaust treatment apparatus for increasing an exhaust temperature;
a variable mechanism for varying valve timing of an exhaust valve; and
control means for controlling the variable mechanism in such a manner that, when a flow amount of an exhaust gas passing through the burner apparatus is equal to or more than a predetermined value, the exhaust valve opens in the middle of piston descending during an expansion stroke .

When the exhaust valve opens in the middle of piston descending during an expansion stroke, a high-temperature exhaust gas or combustion gas existing in a combustion chamber at this time can be supplied to the burner apparatus to increasing an atmosphere gas temperature of the burner apparatus. Therefore, it is possible to ensure sufficient ignition performance even when the flow amount of the exhaust gas is increased to the predetermined value or more.

Preferably the internal combustion engine further comprises detection means for detecting an intake air quantity as an alternative valve of the flow amount of the exhaust gas, wherein the control means controls the variable mechanism in such a manner that, when the intake air quantity detected by the detection means is equal to or more than a predetermined value, the exhaust valve opens in the middle of piston descending during an expansion stroke.

Preferably the burner apparatus includes a fuel addition valve, ignition means and a pre-treatment catalytic converter.

### Brief Description of Drawings

[Fig. 1] Fig. 1 is a schematic diagram of an embodiment in the present invention;
[Fig. 2] Fig. 2 is a longitudinal cross sectional side view showing a burner apparatus;
[Fig. 3] Fig. 3 is a longitudinal cross sectional front view of the burner apparatus as viewed from upstream; and
[Fig. 4] Fig. 4 is a schematic view showing a state of an exhaust valve when the exhaust valve opens.

### Description of Embodiments

Hereinafter, an explanation will be made of the details of a preferred embodiment in the present invention. However, it should be understood that the embodiment in the present invention is not limited to each of the following aspects alone, and the present invention includes all modifications and applications contained in the concept of the present invention as defined in claims. Dimensions, materials, configurations, relative arrangements of construction elements described in the embodiment should not be interpreted to limit the technical scope of the present invention thereto only unless specifically described.

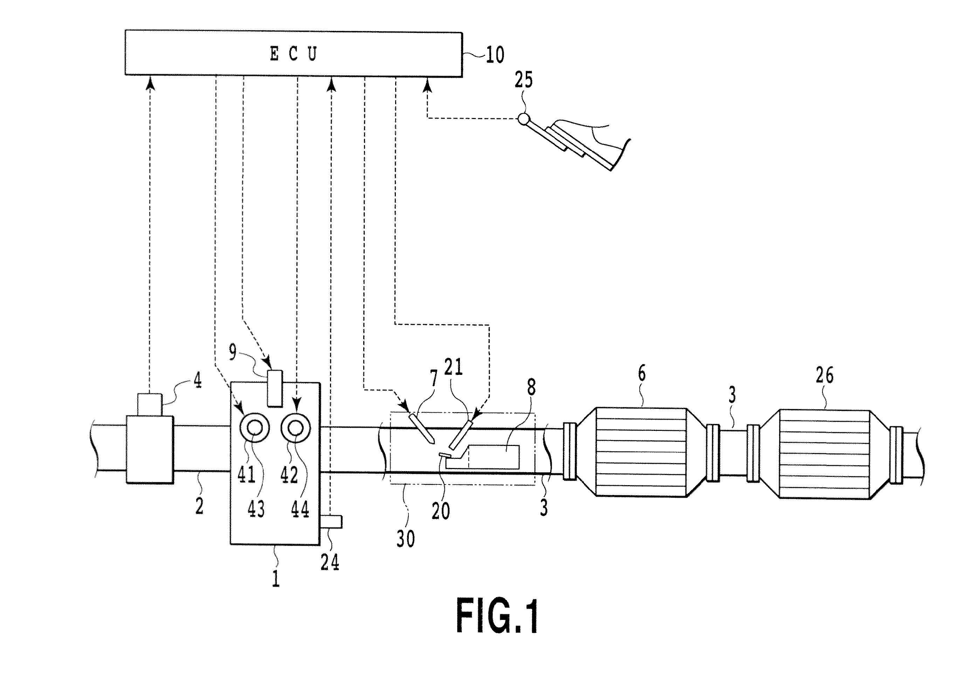

Fig. 1 shows a schematic construction of an engine body 1 and an intake/exhaust system thereof according to an embodiment. The engine body 1 is an on-vehicle four-cycle diesel engine. An intake conduit 2 and an exhaust conduit 3 (exhaust passage) are connected to the engine body 1. An air flow meter 4 is provided in the middle of the intake conduit 2 for outputting a signal in accordance with a flow quantity of intake air flowing in the intake conduit 2. An intake air quantity (that is, intake air flow quantity) flowing into the engine body 1 per unit hour is detected by the air flow meter 4. It should be noted that the engine body I includes a plurality of cylinders and each cylinder is provided with an in-cylinder fuel injector 9, but Fig. 1 shews a single in-cylinder fuel injector alone.

A final end of the exhaust conduit 3 is connected to a muffler (not shown) and is opened to an atmosphere at an outlet of the muffler. An oxidation catalytic converter 6 and a NOx catalytic converter 26 are in series arranged in the middle of the exhaust conduit 3 in that order from upstream.

In the oxidation catalytic converter 6, unburned ingredients such as HC and CO react to O₂ to form CO, CO₂, H₂O and the like. Examples of catalytic substances may include Pt/CeO₂, Mn//CeO₂, Fe/ CeO₂, Cu/CeO₂ and the like.

The NOx catalytic converter 26 preferably comprises a NOx storage reduction (NSR) catalytic converter. The NOx catalytic converter 26 has a function of adsorbing NOx in the exhaust gas when an oxygen concentration of the exhaust gas flowing in is high and reducing the adsorbed NOx when the oxygen concentration of the exhaust gas flowing in is lowered and a reduction ingredient (for example, fuel or the live) exists. In the NOx catalytic converter 26, a noble metal such as platinum Pt as a catalytic ingredient and a NOx absorption ingredient are supported on a substrate surface formed of an oxidant such as alumina Al₂O₃. The NOx absorption ingredient consists of at least one selected from an alkali metal such as kalium K, natrium Na, lithium Li or cesium Cs, an alkaline earth such as barium Ba or calcium Ca, and a rare earth such as lanthanum La or yttrium Y. It should be noted that the NOx catalytic converter 26 may be a NOx selective catalytic reduction converter (SCR).

In addition to the oxidation catalytic converter 6 and the NOx catalytic converter 26, a particulate filter (DPF) for trapping particulates (PM) such as soot in the exhaust gas may be provided. Preferably the DPF is a continuous regeneration type filter on which a catalyst formed of noble metals is supported, wherein the trapped particulates are continuously oxidized and burned_{.} Preferably the DPF is arranged at least downstream of the oxidation catalytic converter 6, and upstream of or downstream of the NOx catalytic converter 26. It should be noted that, in a case of a spark ignition type internal combustion engine, a three-way catalyst is preferably provided in the exhaust passage. The oxidation catalytic converter 6, the NOx catalytic converter 26, the DPF and the three-way catalyst correspond to an exhaust treatment apparatus of the present invention.

A burner apparatus 30 is located upstream of the oxidation catalytic converter 6 in the exhaust conduit 3. The burner apparatus 30 includes the fuel addition valve 7, a glow plug 21 as the ignition means and the pre-treatment catalytic converter 8. The burner apparatus 30 is located downstream of a collector in an exhaust manifold (not shown) connected to the engine body 1.

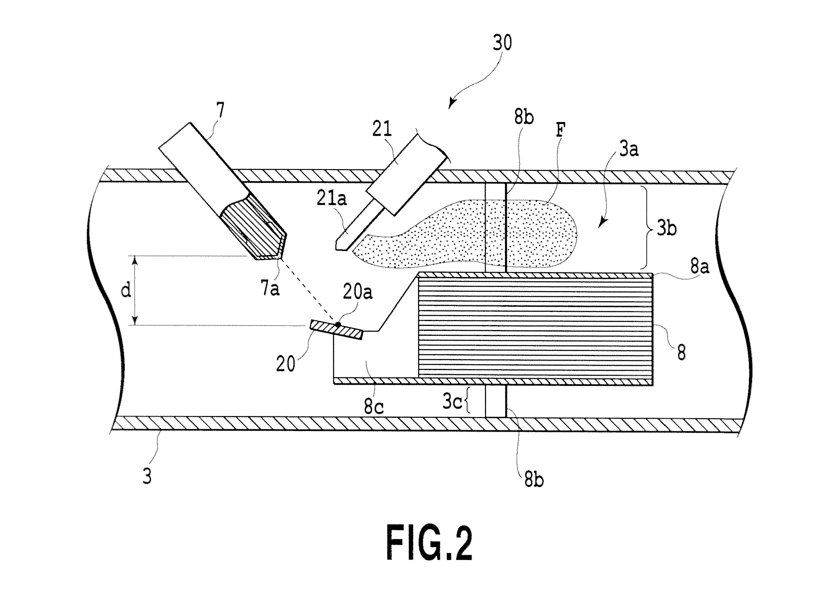

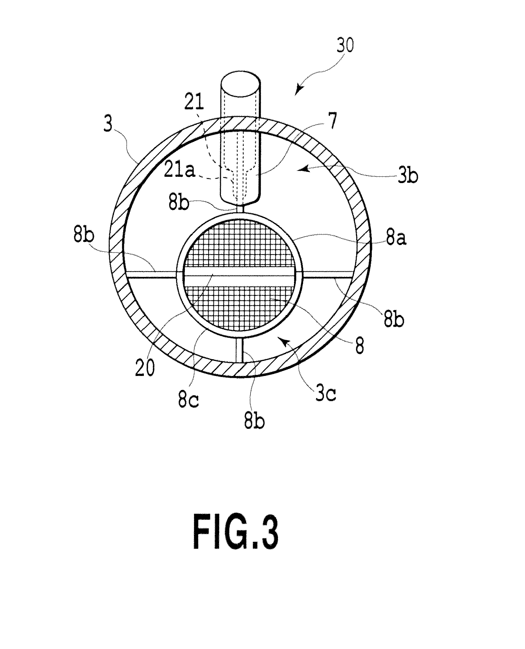

As shown in Fig. 2 and Fig. 3, the fuel addition valve 7 can add fuel of a liquid (light oil) into the exhaust gas. The fuel addition valve 7 is provided with a single injection bore 7a. A central axis of the injection bore 7a includes a component in a direction crossing the exhaust conduit 3 and is inclined obliquely and downward toward the downstream side of the exhaust conduit 3. It should be noted that a plurality of the injection bores may be provided.

The pre-treatment catalytic converter 8 for reforming fuel injected from the fuel addition valve 7 is provided between the fuel addition valve 7 and the oxidation catalytic converter 6 in the exhaust conduit 3. The pre-treatment catalytic converter 8 may be constructed as an oxidation catalytic converter in which rhodium and the like are supported on a carrier made of zeolite, for example.

When fuel is supplied to the pre-treatment catalytic converter 8, if the pre-treatment catalytic converter 8 is activated at this time, the fuel is oxidized in the pre-treatment catalytic converter 8, and the pre-treatment catalytic converter 8 is increased in temperature by oxidation reaction heat generated at this time. In consequence, a temperature of the exhaust gas passing through the pre-treatment catalytic converter 8 can be increased.

In addition, when the temperature of the pre-treatment catalytic converter 8 is increased, hydrocarbons having many carbon numbers in the fuel are decomposed to generate hydrocarbons having small carbon numbers and high reactivity, thereby reforming the fuel to fuel having high reactivity.

In other words, the pre-treatment catalytic converter forms a quick heat generator for quickly generating heat on one side, and forms a reformed-fuel discharge device for discharging the reformed fuel on another side. In addition, a part or all of the fuel supplied from the fuel addition valve 7 is ignited by the glow plug 21, promoting an increase in temperature of the exhaust gas also thereby.

An outer diameter of the pre-treatment catalytic converter 8 is smaller than an inner diameter of the exhaust conduit 3. When the pre-treatment catalytic converter 8 is accommodated in the exhaust conduit 3, it is possible for the exhaust gas to pass through a catalyst diversion 3a formed as a clearance between an outer peripheral surface of the pre-treatment catalytic converter 8 and an inner peripheral surface of the exhaust conduit 3. The pre-treatment catalytic converter 8 is a so-called straight flow type in which individual cells are communicated from upstream to downstream. The pre-treatment catalytic converter 8 is located inside an outer frame 8a formed in a generally cylindrical shape, and the outer frame 8a is supported in the exhaust conduit 3 by a plurality of stays 8b arranged generally radially. The pre-treatment catalytic converter 8 is surrounded by the catalyst diversion 3a over a substantially entire periphery thereof excluding mount portions of the stays 8b.

The exhaust conduit 3 is formed in a generally cylindrical shape. An axis center of the pre-treatment catalytic converter 8 in the exhaust flow direction is biased to be lower than an axis center of the exhaust conduit 3 in the exhaust flow direction in the figure. Therefore, the aforementioned catalyst diversion 3a is composed of a wide-side diversion 3b which is wider in the upward side in the figure and a narrow-side diversion 3c which is narrower in the downward side in the figure.

The glow plug 21 is located in such a manner that a heat generation portion 21a thereof 15 positioned downstream of the fuel addition valve 7 and upstream of the pre-treatment catalytic converter 8. The glow plug 21 is connected via a booster circuit (not shown) to an on-vehicle direct current source, wherein the heat generation portion 21a generates heat at power supply. The heat generated in the heat generation portion 21a can ignite the fuel supplied from the fuel addition valve 7 to generate flame F. The glow plug 21 is inclined so that the axis center is directed toward the upstream side of the exhaust conduit 3, but may be arranged in any posture, for example, intersected at right angles to the flowing direction or located in parallel with a longitudinal direction of a collision plate 20 to be described later. It should be noted that examples of the ignition means may include other apparatuses such as a ceramic heater or a spark plug, particularly an electric heating type apparatus or a spark ignition type apparatus.

A lower part of the front end portion in the outer frame 8a accommodating the pre-treatment catalytic converter 8 is formed of a tub-shaped projection 8c projecting toward the upstream. The flat collision plate 20 is fixed to a front end portion (upstream end portion) and an upper end portion of the projection 8c. The collision plate 20 is positioned to be lower than the axis center of the exhaust conduit 3 and is slightly inclined such that the downstream end is positioned to be lower than the upstream end.

The collision plate 20 can be made of a material excellent in heat resistant properties and impact resistant properties, such as SUS. The fuel addition valve 7 injects fuel toward the collision plate 20 obliquely backward and downward. A central axis of the injection bore 7a in the fuel addition valve 7 is directed toward a center 20a of an upper face of the collision plate 20. The path of fuel supplied from the fuel addition valve 7 includes a component in a direction crossing over the exhaust conduit 3. The collision plate 20 accelerates grain refinement and atomization of fuel by collision of the fuel therewith to improve the dispersibility and diffusion. The fuel having collided with the collision plate 20 is biased downstream by an exhaust stream. The fuel having collided with the collision plate 20 is supplied to the pre-treatment catalytic converter 8 and the heat generation portion 21a of the glow plug 21.

The heat generation portion 21a of the glow plug 21 is located in the vicinity of the pre-treatment catalytic converter 8, and is located slightly upstream and upward of a front end face of the pre-treatment catalytic converter 8, thus making it possible to make heat exchange with the pre-treatment catalytic converter 8. That is, the glow plug 21 is located such that, when a temperature of the pre-treatment catalytic converter 8 is increased, a temperature in the vicinity of the heat generation portion 21a is increased by heat radiation and convention to accelerate ignition of fuel supplied from the fuel addition valve 7. However, a position of the heat generation portion 21a in the glow plug 21 in the flow direction may be the same as or downstream of the front end face of the pre-treatment catalytic converter 8.

As shown in Fig. 1, an electronic control unit (hereinafter, called ECU) 10 is also provided in the engine body 1 for controlling various type of devices in response to an operating condition of the engine body 1, demands of a driver or the like. The ECU 10 is constructed of a CPU for executing various types of calculation processes in relation to engine control, a ROM for storing programs and data necessary fro the control, a RAM for temporarily storing the calculation result of the CPU and the like, input/output ports for inputting/outputting signals between the CPU and the outside, and the like.

Various types of sensors including a crank angle sensor 24 for detecting a crank angle of the engine body 1 and an accelerator opening degree sensor 25 for outputting an electrical signal in accordance with an accelerator opening degree in addition to the aforementioned air flow meter 4 are connected via electrical wiring to the ECU 10, and these output signals are inputted to the ECU 10. In addition, various types of devices including the in-cylinder fuel injector 9, the fuel addition valve 7 and the glow plug 21 are connected via electrical wiring to the ECU 10, and these devices are controlled by the ECU 10. The ECU 10 can detect an intake air quantity based upon an output value of the air flow meter 4, detect an engine rotational speed based upon an output value of the crank angle sensor 24, and detect a required load of the engine body 1 based upon an output value of the accelerator opening degree sensor 25.

Further, an intake-side variable mechanism 41 and an exhaust-side variable mechanism 42 respectively for varying valve timings of the intake valve and the exhaust valve of each cylinder (not shown) are provided in the engine body 1. The variable mechanisms 41 and 42 change relative phases of an intake cam shaft 43 and an exhaust cam shaft 44 to a crank shaft and change opening/closing timings of the intake valve and the exhaust valve with the same operating angle being kept. The variable mechanisms 41 and 42 are also included in the various types of devices and are controlled by the ECU 10.

In the present embodiment, at the time of performing a temperature-increasing control using the burner apparatus 30, the ECU 10 controls the fuel addition valve 7 and the glow plug 21. That is, fuel is injected from the fuel addition valve 7 and power is appropriately supplied to the glow plug 21 to create a sufficiently high temperature. The injected fuel is ignited and burned by the glow plug 21 to generate flame F, thus generating a high-temperature heated gas. The heated is supplied to the oxidation catalytic converter 6 and the NOx catalytic converter 26. In addition, the flame F and the heated gas can be used to burn the reformed fuel discharged from the outlet of the pre-treatment catalytic converter 8.

A quantity of fuel to be injected from the fuel addition valve 7 is set based upon parameters (engine rotational speed, accelerator opening degree, intake air quantity and the like) representing an engine operating condition according to a map in advance stored in the ROM of the ECU 10.

As described above, the ignition performance of the burner apparatus 30 has a tendency of being deteriorated when a flow amount of the exhaust gas passing through the burner apparatus 30 is increased to a predetermined value or more. The reason for it is that, when the flow amount of the exhaust is large, the atmosphere gas temperature of the glow plug 21 as the ignition means is lowered. For example, when the flow amount of the exhaust gas is increased to 12g/s, 150°C or more is necessary as a temperature of the exhaust gas under the atmosphere of the glow plug 21 for obtaining appropriate ignition combustion. However, it is actually difficult to obtain such an exhaust gas temperature under the condition of the flow amount of the exhaust gas.

Therefore, for overcoming this problem in the present embodiment, when the flow amount of the exhaust gas is equal to or more than a predetermined value, the exhaust-side variable mechanism 42 is controlled in such a manner that the exhaust valve opens in the middle of piston descending during an expansion stroke.

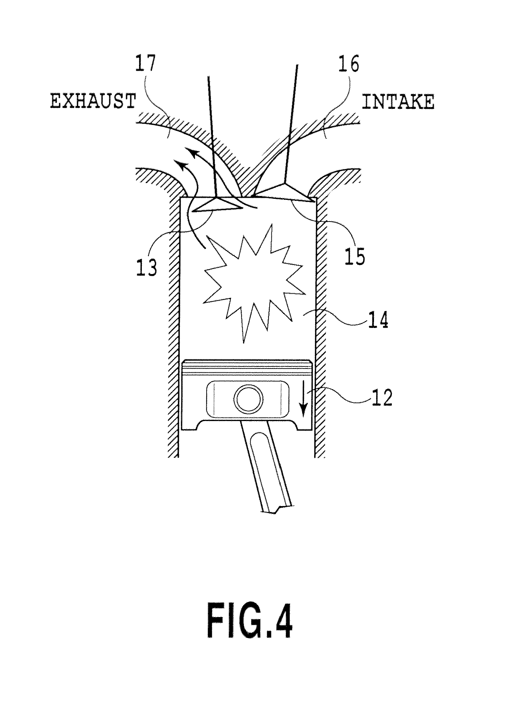

As shown in Fig. 4, when the exhaust valve 13 is opened in the middle of the descending of the piston during the expansion stroke or the combustion stroke (that is, is opened earlier), the high-temperature exhaust gas or combustion gas existing in the combustion chamber 14 at this time is sent to the exhaust conduit 3, finally the burner apparatus 30, making it possible to increase the atmosphere gas temperature around the glow plug 21 of the burner apparatus 30. Therefore, even when the flow amount of the exhaust gas is increased to the predetermined value or more, appropriate and sufficient ignition performance can be ensured. It should be noted that in Fig. 4, 15 indicates the intake valve, 16 indicates an intake port communicated with the intake conduit 2, and 17 indicates an exhaust port communicated with the exhaust conduit 3.

Preferably an intake air quantity Ga is used as an alternative value of the flow amount of the exhaust gas. The intake air quantity Ga is detected by the air flow meter 4 and the ECU 10. The ECU 10 controls the exhaust-side variable mechanism 42 in such a manner that, when the intake air quantity Ga detected by the air flow meter 4 is a predetermined value (for example, 12g/s) or more, the exhaust valve 13 opens (specially, starts to open) in a predetermined first timing during the expansion stroke and in the middle of the piston descending. On the other hand, the ECU 10 controls the exhaust-side variable mechanism 42 in such a manner that, when the intake air quantity Ga detected by the air flow meter 4 is less than the predetermined value, the exhaust valve 13 opens in a predetermined second timing later than the first timing.

As described above, the present invention is explained on specifics in some degree, but it is to be understood that various modifications and changes are possible without departing from the spirit and the scope of the present invention as defined in claims. The embodiment of the present invention is not limited to the aforementioned respective constructions and includes all modifications and applications included in the concept of the present invention as defined in claims. Therefore, the present invention should not be interpreted in a limiting manner and can be applied to any other technologies included within the scope of the concept in the present invention. Means for solving the problem in the present invention can be used in possible combinations.

At least one of the pre-treatment catalytic converter and the exhaust conduit may have a cross section which is formed in a non-circular shape such as an elliptical shape or an oval shape. The kind and the arrangement order of the exhaust treatment apparatus placed downstream of the pre-treatment catalytic converter may be set arbitrarily.

## Claims

1. An internal combustion engine comprising:
an exhaust treatment apparatus provided in an exhaust passage;
a burner apparatus provided upstream of the exhaust treatment apparatus for increasing an exhaust temperature;
a variable mechanism for varying valve timing of an exhaust valve; and
control means for controlling the variable mechanism in such a manner that, when a flow amount of an exhaust gas passing through the burner apparatus is equal to or more than a predetermined value, the exhaust valve opens in the middle of piston descending during an expansion stroke.

2. An internal combustion engine according to claim 1, further comprising:
detection means for detecting an intake air quantity as an alternative value, of the flow amount of the exhaust gas,
wherein the control means controls the variable mechanism in such a manner that, when the intake air quantity detected by the detection means is equal to or more than a predetermined value, the exhaust valve opens in the middle of piston descending during an expansion stroke.

3. An internal combustion engine according to claim 1 or 2, wherein
the burner apparatus includes a fuel addition valve, ignition means and a pre-treatment catalytic converter.
